# EUROPEAN PATENT APPLICATION

(11) **EP 0 606 969 A1**
(43) Date of publication of application: **20.07.1994**
(21) Application number: 94300039.8
(22) Date of filing: 05.01.1994
(51) Int. Cl.: F16B 7/04, A61G 12/00, B62B 3/02

(54) **Frame connector**

(30) Priority: 12.01.1993 US 3266
(71) Applicant: HERMAN MILLER, INC., Zeeland, Michigan 49464-0302 (US)
(72) Inventor: Harris, David P., Grand Rapids, Michigan 49507 (US); Kenyon, Eric M., Binghamton, New York 13901 (US); Otto, John G., Granville, Michigan 49418 (US)
(74) Representative: Mayes, Stuart David

(57) **Abstract**

A frame connector (10) comprising a first element (12) having a first contact surface (22) and a second element (14) having a second contact surface (34). The first (22) and second (34) contact surfaces are arranged so as to engage each other in an non-expanded first state. The frame connector (10) further includes a pushing piece (62) to push against the first contact surface (22) so as to separate and move the first (22) and second (34) contact surfaces to a second expanded state. The frame connector (10) in the second expanded state is capable of engaging an opening of a pipe or tubing (58). The frame connector (10) in conjunction with pipes or tubing and trays can be used to form a multiple tray cart (64).

## Description

### FIELD OF THE INVENTION

The present invention relates to a connector for connecting two pieces of pipe or tubing and to a tray assembly employing the same.

### BACKGROUND OF THE INVENTION

In hospitals, it is a common practice to convey various articles, such as medicine and paperwork, from one work station to another work station by using a tray mounted on wheels. One common disadvantage of prior art trays is their inability to be easily reconfigured to add additional trays or exchange trays of a different type or function to the frame. By having additional trays, one is able to transport more items in a single round than with a single tray. This leads to improved saving of time and allows personnel more time for more important matters.

### SUMMARY OF THE INVENTION

Embodiments of the present invention provide a frame connector comprising a first element having a first contact surface and a second element having a second contact surface. The first and second contact surfaces are arranged so as to engage each other in a first state. The frame connector further includes a pushing piece to push against the first contact surface so as to separate and move the first and second contact surfaces to a second state.

The above-described frame connector provides an inexpensive system for connecting pipes or tubing to each other.

Another advantage of the frame connector is that it provides an uncomplicated system for attachment of pipes or tubing to each other such that ordinary people can attach the pieces themselves.

Another embodiment of the invention provides a cart, comprising a base and a pair of U-shaped tubes attached to the base and positioned parallel to each other so that free ends of the pair of U-shaped tubes are located at the corners of a rectangle. Furthermore, a frame connector is attached to each free end of the pair of U-shaped tubes, wherein each frame connector engages a free end of a corresponding U-shaped tube in a radially outward manner.

The above-described embodiment provides a versatile cart capable of changing the configuration of trays on the cart in response to the intended uses of a particular cart. The change in configuration is made without dismantling the cart frame.

### DETAILED DESCRIPTION OF DRAWINGS

FIG. 1 is a side view of the exterior sides of an embodiment of a frame connector when disassembled;
FIG. 2 is a side view of the interior sides of the embodiment of the frame connector shown in FIG. 1;
FIG. 3 is a view of the embodiment of FIG. 1 when assembled;
FIG. 4 is a view of the embodiment of FIG. 1 when connected to two pipes or tubing;
FIG. 5 is a top view of the embodiment of FIG. 4;
FIG. 6 is a cross-sectional view of the embodiment of FIG. 4;
FIG. 7A is a view of a base of an embodiment of a cart assembly;
FIG. 7B is a view of the base of the cart assembly of FIG. 7A employing the embodiment of the frame connector of FIG. 1;
FIG. 7C is a view of an embodiment of a tray to be attached to the base of the cart assembly of FIG. 7B;
FIG. 7D is an enlarged view of the embodiment of the insertion piece attached to the tray of FIG. 7C; and
FIG. 7E is a view of the embodiment of the cart assembly of FIGS. 7A-7D when fully assembled.

### DETAILED DESCRIPTION OF PREFERRED EMBODIMENT

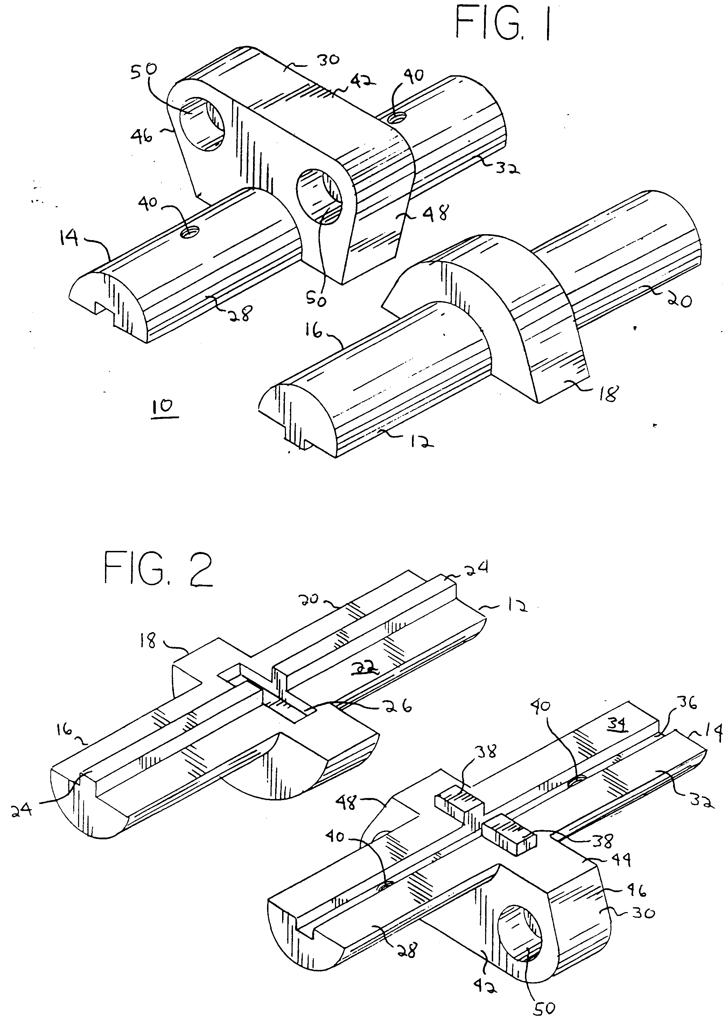

The present invention is best understood upon viewing a preferred embodiment illustrated in FIGS. 1-7E. One embodiment of a frame connector is shown in FIGS. 1-3. Frame connector 10 comprises two mating elements 12 and 14, which are each preferably half-cylindrical in shape. It is understood that mating elements 12 and 14 may also have other shapes, such as being rectangular or triangular.

As shown in FIGS. 1 and 2, mating element 12 comprises a top male insertion section 16, a middle support section 18, and a bottom male insertion section 20. Sections 16, 18, and 20 are preferably integrally made from the same piece of material, such as aluminum. Sections 16, 18, and 20 together define a male contact surface 22, which preferably is substantially planar having a pair of rectangular ridges 24. Rectangular ridges 24 are separated from each other by a rectangular channel 26 positioned along a direction perpendicular to the direction ridges 24 lie along. Top and bottom male insertion sections 16 and 20, respectively, preferably comprise half-cylinders having a length of approximately 1 11/16'' and a radius of approximately 0.55''. Middle support section 18 preferably comprises a half-cylinder having a length of approximately 5/8'' and a radius of approximately 1''. It is understood that other shapes for middle support section 18 are possible, such as triangular, cylindrical, or rectangular.

Middle support section 18 is located between top and bottom male insertion sections 16 and 20. Each rectangular ridge 24 preferably has a length of approximately 1 7/8'', a height of approximately 1/8'', and a width of approximately 1/4''. Rectangular channel 26 preferably has a depth of approximately 1/8'', a width of approximately 1/4'', and a length of approximately 1 1/4''. Ridge 24 and channel 26 are each symmetrically positioned with respect to a plane of symmetry of mating element 12.

Mating element 14 comprises a top male insertion section 28, a middle support section 30, and a bottom male insertion section 32. Sections 28, 30, and 32 are preferably integrally made from the same piece of material, such as aluminum. Sections 28, 30, and 32 together define a female contact surface 34, which preferably is substantially planar having a rectangular channel 36. Rectangular channel 36 preferably has a depth of approximately 1/4'', a width of approximately 1/4'', and a length of approximately 4'', so that rectangular ridges 24 fit snugly therein. Contact surface 34 also has a pair of rectangular ridges 38. Rectangular ridges 38 are separated from each other by rectangular channel 36 and are positioned along a direction perpendicular to the direction channel 36 lies along. Each rectangular ridge 38 preferably has a length of approximately 7/16'', a height of approximately 1/8'', and a width of approximately 1/4'', so that rectangular ridges 38 fit snugly in rectangular channel 26. Ridges 38 and channel 36 are each symmetrically positioned with respect to a plane of symmetry of mating element 14. Two openings or holes 40 are located in channel 36 and extend to the other side of mating element 14. Holes 40 preferably are threaded, have a radius of approximately 1/8'' and each are located approximately 7/8'' from an end of mating element 14. Top and bottom male insertion sections 28 and 32, respectively, preferably comprise half-cylinders having a length of approximately 1 11/16'' and a radius of approximately 0.55''.

Middle support section 30 has a cross-section having a trapezoidal shape comprising a major base 42 having a length of approximately 2 1/4'', a minor base 44 parallel to the major base 42 and having a length of approximately 2 1/8'', and two sides 46 and 48 connected to major and minor bases 42 and 44, each having a length of approximately 7/8'' and each forming an interior angle e of approximately 70°. It is understood that other shapes for middle support section 30 are possible, such as triangular, cylindrical, or rectangular. The width of middle support section 30 is approximately 0.63''. Middle support section comprises a pair of support openings or holes 50. Each opening 50 preferably is centered about an axis wherein each opening has a top opening section and a bottom opening section. Each axis is approximately 0.47'' from major base 42 and they are separated from each other by approximately 1 3/4''. Top circular opening section is nearest the top mating section 28 and preferably has a depth of approximately 0.35'' and a radius of approximately 0.36'' as measured from the axis. At the bottom of the top opening section a second opening or hole is present preferably having a depth of approximately 0.28'' so as to extend to the other side of middle support section 30 and a radius of approximately 0.14'' as measured from the axis. Middle support section 30 is located between top and bottom male insertion sections 28 and 32.

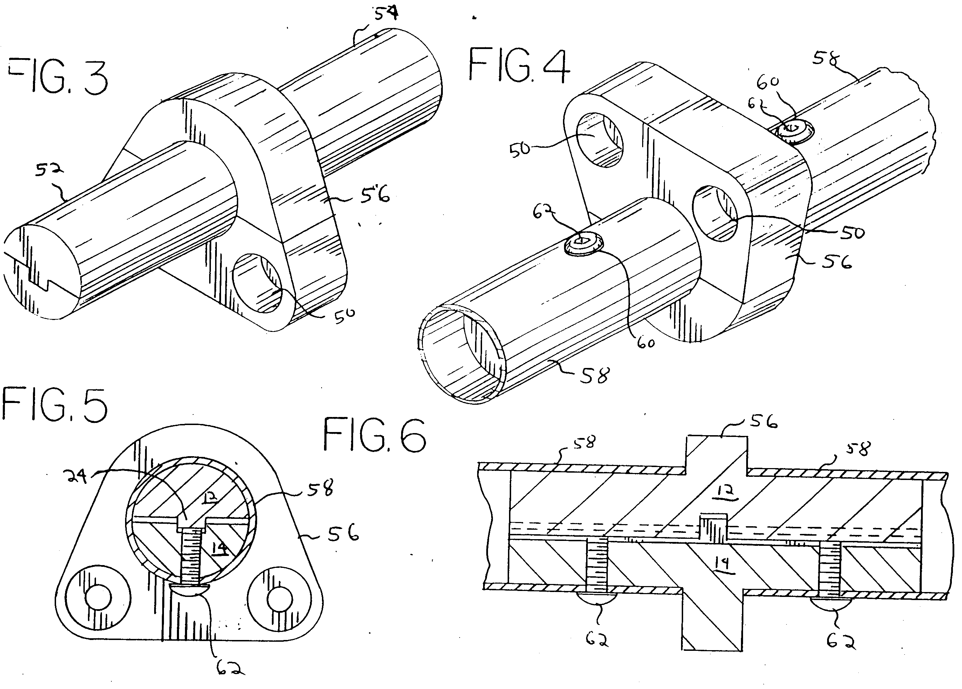

As shown in FIG. 3, frame connector 10 is formed by having contact surfaces 22 and 34 engage each other by having rectangular ridges 24 and 38 inserted in rectangular channels 36 and 26, respectively. Thus, rectangular ridges 24 and 38 in combination with rectangular channels 36 and 26 define an indexing mechanism which ensures that mating elements 12 and 14 are properly aligned with each other when the frame connector is in either a non-expanded or expanded state to be described herewith. It is understood that other embodiments of the indexing mechanism are possible. For example, rectangular ridges 24 and 38 may be on the same mating element while the corresponding rectangular channels 36 and 26 would be on the other mating element. In addition, the ridges could be in the shape of a cross with an aligned channel having a corresponding indented shape. Furthermore, other configurations for the ridges and channels are possible, such as the ridges could be cylindrical or triangular pegs and the channels would correspondingly have indentations having the same shape as the pegs and be aligned the same as the pegs.

The frame connector 10 of FIG. 3 is in a non-expanded state in which top male insertion sections 16 and 28 form a top male mating member 52 which is preferably cylindrical in shape having a radius of approximately 0.55'' and a length of approximately 1 11/16''. Likewise, bottom male insertion sections 20 and 32 form bottom male mating member 54 in the form of a cylinder having a radius of approximately 0.55'' and a length of approximately 1 11/16''. Furthermore, middle support sections 18 and 30 preferably form a triangular-like support member 56. However, other shapes for support member 56 are possible, such as cylindrical, triangular, and rectangular.

With the frame connector 10 in its non-expanded state, it is possible to attach frame elements such as pipe or tubing 58 to both male mating members 52 and 54. Pipe 58 preferably is a cylindrical tube having a length of approximately 16 1/2'', a radius of approximately 0.63'', and is made of steel. Pipe 58 preferably has a pair of aligned holes 60 each positioned approximately 1.00'' from each end of pipe 58 and having a radius of approximately 0.14''. Attachment of pipe 58 to frame connector 10 is accomplished by inserting one opening located at an end of pipe 58 over either male mating member 52 or 54 and aligning holes 40 and 60. In an embodiment not shown, pipe 58 may also have an indexing mechanism comprising ridges or channels located on the inner surface of the opening at the end of pipe 58. The ridges or channels of the pipe would engage complementary channels or ridges, respectively, located on the outer surface of male mating members 52 and 54. Engagement would be in a manner similar to that between ridges 24, 38 and channels 26, 36 described above so that elements 12 and 14 are always aligned.

Once the pipe 58 is in position, a pushing piece, such as screw 62, is inserted through aligned holes 40 and 60. Providing a snug fit between frame connector 10 and pipe 58 is accomplished by inserting screw 62 to an extent that it makes contact with rectangular ridge 24, as shown in FIGS. 5 and 6. Screw 62 is further tightened such that screw 62 pushes against ridge 24 so that mating elements 12 and 14 separate so that frame connector 10 is in a second and expanded state. In the expanded state, mating elements 12 and 14 make contact with the inner walls of pipe 58 creating a snug fit. Furthermore, a single connector 10 is capable of being attached to two pieces of pipe 58 as shown in FIGS. 4 and 6. It is apparent that pipe 58 may have different cross-sectional shapes such as triangular and rectangular wherein top and bottom male mating members 52 and 54 have a corresponding cross-sectional shape when in the non-expanded state. Furthermore, pipe 58 may be a solid cylinder having openings at each end thereof and corresponding to the shape of the male mating members 52 and 54 and in which frame connector 10 engages to form a connection between such pipe. The openings may also be located on the sides of the solid cylinder allowing for flexibility in designing the structure.

Though in the above described embodiment mating elements 12 and 14 are made of a single material throughout, it is also possible to construct mating elements through pressure diecasting resulting in a thin walled connector. Furthermore, any sections made by the pressure diecast process would either overlap simply or in the manner of a labyrinth so as to prevent water penetrating the connector. In addition, in the embodiment of FIGS. 1-6 and the above-described diecasting embodiment a gasket made of a non-permeable, but compliant material may be inserted between mating elements 12 and 14, such that when the connector is "expanded", there is no opportunity for water to enter through the connector and fill the cart pipes.

With the frame connector 10 of FIGS. 1-6 it is possible to construct structures made of tubing, such as scaffolding, shelving, furniture, playground equipment, and a mobile cart 64 as shown in FIGS. 7A-7C. Cart 64 comprises two bottom U-shaped pipes or tubing 66. Pipes 66 comprise two vertical sections 68 having a length of approximately 14 1/4'' and a horizontal section 70 having a length of approximately 40 1/2''. Pipes 66 have a radius of approximately 5/8'' and have a hole (not shown) located on each vertical section 68. As shown in FIG. 7A, U-shaped pipes 66 are arranged parallel to each other by being attached to bottom rectangular base 72, by well-known methods such as welding. Rectangular base 72 preferably is made of steel and has a length of approximately 37 1/4'' and a width of approximately 23 1/4''. Attached to the underside of base 72 are preferably four casters 74 attached by well-known means such as nuts and bolts. Once the two U-shaped pipes 66 are attached to bottom base 72, the four open ends 76 of the pipes define the corners of a rectangle (shown as dashed lines).

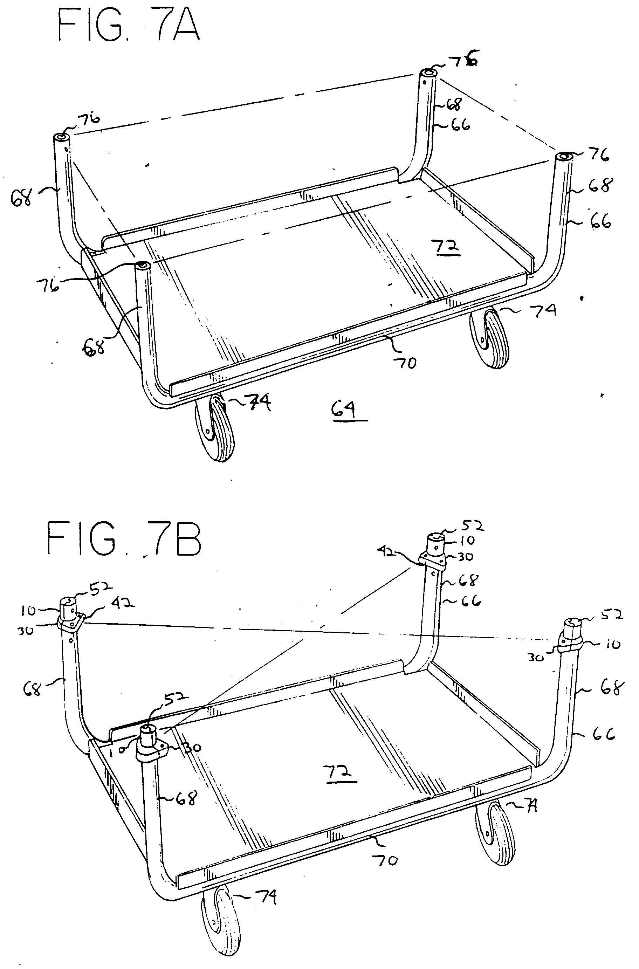

Bottom male mating members 54 of frame connectors 10 are inserted into the top open end of vertical sections 68. Connectors 10 are oriented such that the major base 42 is perpendicular to and bisected by a diagonal of the rectangle defined by the open ends 76 of pipes 66, as shown in FIG. 7B.

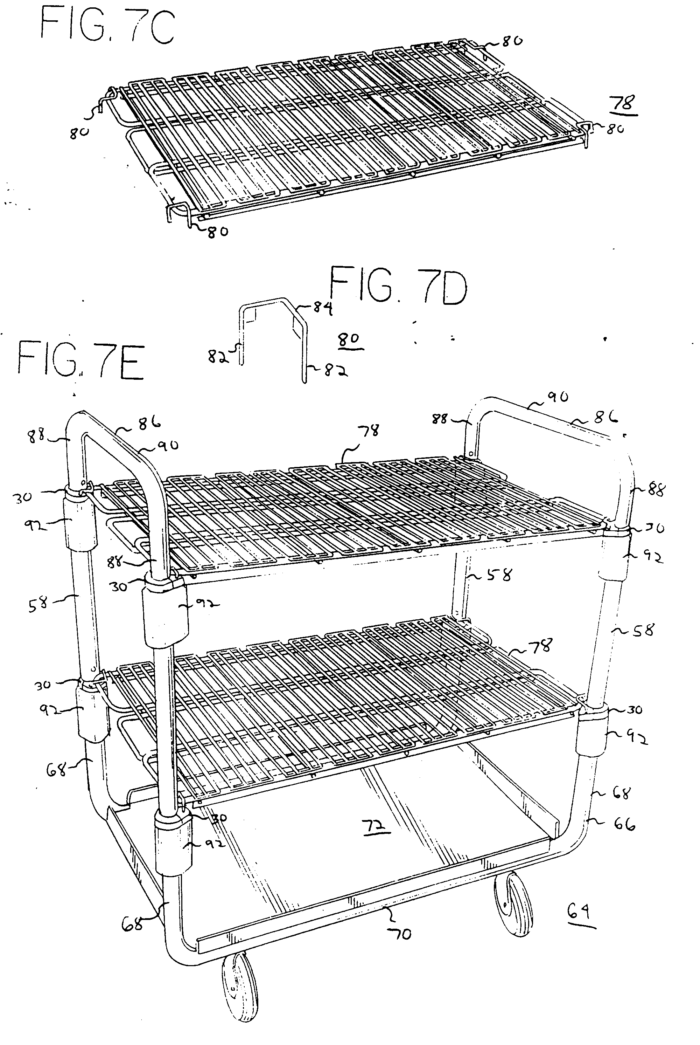

An article receptacle such as rectangular wire tray 78 is shown in FIG. 7C to be attached to the four connectors 10. Wire tray 78 is preferably made of steel and has grid-like construction, though it is understood that other configurations for the tray are possible. At each corner of wire tray 78 are insertion pieces 80 which are attached to tray 78 by well-known means such as welding. Insertion piece 80, shown in FIG. 7D, is preferably made of the same material as tray 78 and has a V-type shape. The length of each of the legs 82 of the insertion piece 80 is approximately 1.00'' and the length of the middle section 84 is approximately 2 3/4''. Insertion piece 80 is approximately bent at a right angle at about 1 3/8'' from the free ends of legs 82.

With the above described tray 78, it is possible to attach the tray 78 to the connectors 10 inserted in pipes 66. Attachment is accomplished by inserting the free ends of insertion pieces 80 into the second holes (not shown) of connector pieces 10. Free ends of insertion piece 80 are preferably threaded so that a nut can be inserted thereon on the portion of the free end which extends through the second holes. Thus, the construction of a cart with two horizontal trays is easily achieved. It is to be understood that there are other ways of attaching tray 78, such as direct welding of the tray 78 to middle support section 30 without the need for insertion piece 80 or openings 50.

If more trays 78 are desired, then one inserts vertical pipe or tubing 58 over top male mating elements 52 located at the four corners and attaches them via a screw as described previously. Four connectors 10 are attached to the open ends of vertical pipes 58 as before. Then another tray 78 is attached at the openings of the four new connectors 10 as before. The above process of adding trays is continued until the desired number of trays 78 have been attached. When the last tray 78 is attached, two U-shaped top pipes or tubing 86 are attached to connectors 10, as shown in FIG. 7E. U-shaped tubing 86 is inverted with respect to U-shaped tubing 66. Preferably, each U-shaped top pipe is attached to the two connectors 10 defining the width of the rectangle defined by the connectors 10. Each U-shaped top pipe 86 is preferably made of the same material as the other pipes and has a radius of approximately 5/8''. The length of each of the legs 88 of top pipe 86 is approximately 7'' and the length of the middle section 90 is approximately 24''. Besides using U-shaped pipes 86 to complete the final tray level of the cart 64, it is possible to either attach a cap to top male mating member or to eliminate top male mating member 52 to prevent it from jutting out at the top level.

For the above-described cart 64, it is preferred to add bumpers 92 to prevent damage to the cart 64 should the cart 64 make contact with an object. Bumpers 92 preferably have the same cross-sectional shape as the middle support member 56, but are slightly larger in size to extend beyond the middle support member by about 1/4''. Bumpers 92 are made of a resilient material, such as urethane. Bumpers 92 have a height of approximately 4'' and a cylindrical opening (not shown) having a radius sufficient to have the pipes 58 or 66 snugly engage the bumpers. Bumpers 92 are preferably positioned adjacent to and below each middle support member 56.

Though the above description pertains to a preferred embodiment of the invention, it is understood that the various dimensions and shapes can be varied without departing from the spirit of the invention. In this vein it is envisioned that the locations of rectangular ridge 24 and rectangular channel 36 can be interchanged. Furthermore, it is contemplated that the frame connector 10 can be used to attach pipe or tubing in horizontal or other angular directions, besides vertical directions.

While the invention has been described with relation to certain presently preferred embodiments, those with skill in this art will recognize other modifications of the invention which will still fall within the scope of the invention, as expressed in the accompanying claims.

## Claims

1. A frame connector for connecting a frame element having an opening, comprising:
a first element having a first contact surface;
a second element having a second contact surface, wherein said first and second contact surfaces engage each other in a first state;
a pushing piece to push against said first contact surface to separate and push apart said first and second contact surfaces to a second state, wherein said first and second contact surfaces are separated to an extent such that first element and said second element engage said opening of said frame element; and
an indexing mechanism to maintain said first contact and said second contact surface in a parallel orientation with respect to each other as each are pushed apart from each other from said first state to said second state.

2. The frame connector of claim 1, wherein said first contact surface comprises a male surface.

3. The frame connector of claim 2, wherein said indexing mechanism comprises a ridge located on said first contact surface.

4. The frame connector of claim 1, wherein said second element comprises an opening facing said first contact surface and into which said pushing element is located, wherein said pushing element is extendable from said hole so as to engage and push against said first contact surface.

5. The frame connector of claim 2, wherein said second contact surface comprises a female surface.

6. The frame connector of claim 5, wherein said indexing mechanism comprises a channel located on said second contact surface.

7. The frame connector of claim 1, wherein said first contact surface comprises a female surface.

8. The frame connector of claim 7, wherein said indexing mechanism comprises a channel located on said first contact surface.

9. The frame connector of claim 6 or claim 8, wherein said channel is rectangular.

10. The frame connector of claim 9 when dependent on claim 8, said second contact surface comprises a male surface.

11. The frame connector of claim 10, wherein said indexing mechanism comprises a ridge located on said second contact surface.

12. The frame connector claim 3 or claim 11, wherein said ridge is rectangular.

13. The frame connector of claim 1, further comprising a support surface to support an article receptacle.

14. The frame connector of claim 13, wherein said support surface comprises openings to support said article receptacle.

15. A frame connector for connecting a frame element having an opening, comprising:
a first half-cylindrical element having a first contact surface;
a second half-cylindrical element having a second contact surface, wherein said first and second contact surfaces engage each other in a first state;
a pushing piece to push against said first contact surface to push apart said first and second contact surfaces to a second state, wherein said first and second contact surfaces are separated to an extent such that first element and said second element engage said opening of said frame element; and
an indexing mechanism to maintain said first contact and said second contact surface in a parallel orientation with respect to each other as each are pushed apart from each other from said first state to said second state.

16. The frame connector of claim 15, wherein said first half-cylindrical element comprises a first top male mating surface, a first middle support surface, and a first bottom male mating surface.

17. The frame connector of claim 16, wherein said second half-cylindrical element comprises a second top female mating surface, a second middle support surface, and a second bottom female mating surface.

18. The frame connector of claim 15, wherein said second half-cylindrical element comprises an opening facing said first contact surface and into which said pushing element is located, wherein said pushing element is extendable from said opening so as to engage and push against said first contact surface.

19. The frame connector of claim 4 or claim 18, wherein said opening is threaded and said pushing element comprises a screw.

20. The frame connector of claim 15, wherein said frame connector in said first state comprises a top cylindrical mating element, a middle support, and a bottom cylindrical mating element.

21. The frame connector of claim 20, wherein said middle support has a hole having an axis parallel with the axis of said top cylindrical mating element.

22. The frame connector of claim 20, wherein said middle support is triangular-like.

23. A pipe connection system, comprising:
a first element having a first contact surface;
a second element having a second contact surface, wherein said first and second contact surfaces engage each other in a first state;
a pipe having an opening, wherein said first element and said second element engage said opening of said pipe; and
a pushing piece to push against said first contact surface to separate and move said first and second contact surfaces to a second state which engages said opening of said pipe.

24. The pipe connection system of claim 23, wherein said first contact surface comprises a ridge.

25. The pipe connection system of claim 24, wherein said second contact surface comprises a channel.

26. The pipe connection system of claim 23, wherein said second element comprises an opening facing said first contact surface and into which said pushing element is located, wherein said pushing element is extendable from said hole so as to engage and push against said first contact surface.

27. The pipe connection system of claim 25, wherein said opening is threaded and said pushing element comprises a screw.

28. The pipe connection system of claim 23, comprising a second pipe, wherein said first element and said second element engage said second pipe.

29. A cart, comprising:
a base;
a pair of U-shaped tubes attached to said base and positioned parallel to each other so that free ends of said pair U-shaped tubes are located at the corners of a rectangle;
a frame connector attached to each free end of said pair of U-shaped tubes, wherein each free end comprises an opening and said frame connectors are inserted in said openings and engage said U-shaped tubes by expanding against an inner surface of said free ends.

30. The cart of claim 29, comprising a tray attached to said frame connectors.

31. A cart, comprising:
a base;
an article receptacle;
a pair of U-shaped tubes attached to said base and positioned parallel to each other so that free ends of said pair U-shaped tubes are located at the corners of a rectangle;
a frame connector, comprising:
a first element having a first contact surface;
a second element having a second contact surface, wherein said first and second contact surfaces engage each other in a first state;
a pushing piece to push against said first contact surface to separate and push apart said first and second contact surfaces to a second state, wherein said first and second contact surfaces are separated to an extent such that first element and said second element engage said opening of said frame element;
an indexing mechanism to maintain said first contact and said second contact surface in a parallel orientation with respect to each other as each are pushed apart from each other from said first state to said second state; and
a support member supporting said article receptacle;
wherein a plurality of said frame connectors are attached to each free end of said pair of U-shaped tubes, wherein each free end comprises an opening and said frame connectors are inserted in said openings and engage said U-shaped tubes by expanding against an inner surface of said free ends.

32. The cart of claim 31, wherein said article receptacle comprises a tray.

33. The cart of claim 31, wherein said support member comprises openings to support said article receptacle.

34. The cart of claim 29 or claim 31, comprising a plurality of vertical tubes each having a first and a second end, wherein each of said frame connectors are connected to an end of a corresponding but separate vertical tube.

35. The cart of claim 34, comprising a plurality of second frame connectors each attached to a corresponding second end of said plurality of vertical tubes, wherein said second frame connectors engage said plurality of vertical tubes in a radially outward manner.

36. The cart of claim 35, comprising a tray attached to said second frame connectors.

37. The cart of any of claims 30, 35 or 36, wherein said frame connector comprises a support member having openings to have said tray attached thereto.

38. The cart of claim 35 or claim 37 when dependent on claim 35, further comprising: a second pair of U-shaped tubes attached to said second frame connectors.

39. The cart of claim 38 or claim 37 when dependent on claim 35, wherein said second pair of U-shaped tubes are positioned parallel to each other.

40. The cart of claim 38 or claim 39 when dependent on claim 38, wherein said second pair of U-shaped tubes are inverted with respect to said other pair of U-shaped tubes.

41. The cart of claim 31 comprising a bumper located below each said support member.
